# EUROPÄISCHE PATENTANMELDUNG

(11) **EP 4 723 017 A1**
(43) Veröffentlichungstag der Anmeldung: **08.04.2026**
(21) Anmeldenummer: 24204259.6
(22) Anmeldetag: 02.10.2024
(51) Int. Cl.: G06Q 30/0283, G06Q 20/20, G07F 11/62

(54) **VERKAUFSAUTOMAT UND VERFAHREN ZUM BETRIEB EINES VERKAUFSAUTOMATEN**

(71) Anmelder: Remas GmbH, 79183 Waldkirch (DE)
(72) Erfinder: Münch, Alex Hugo, 79102 Freiburg (DE); Tetik, Serkan, 79183 Waldkirch (DE); Rupp, Maximilian Ole, 79211 Denzlingen (DE); Pforte, Marcel, 79183 Waldkirch (DE)
(74) Vertreter: Westphal, Mussgnug & Partner Patentanwälte mbB

(57) **Zusammenfassung**

Bereitgestellt werden ein Verkaufsautomat (1) mit einer Mehrzahl von Fächern (3a,3b) zur Aufnahme von zu erwerbenden Waren, einem Entnahmefach (4), auf das der Kunde zumindest zeitweise Zugriff hat, einer Eingabevorrichtung (21) zur Auswahl einer zu erwerbenden Ware, einer Bezahlvorrichtung (22a,22b, 22c,22d) zum Entrichten eines Kaufpreises, einem Ausgabemechanismus (31,32,33) zum Überführen einer Ware aus einem der Fächer (3a,3b) zur Aufnahme von zu erwerbenden Waren in das Entnahmefach (4), auf das Kunden zumindest zeitweise Zugriff haben, und einer Steuerelektronik (23), welche ausgelegt und eingerichtet ist, um den Ausgabemechanismus (31,32,33) in Abhängigkeit von der vom Kunden mittels einer Eingabevorrichtung (21) getroffenen Auswahl und einem Freigabesignal der Bezahlvorrichtung (22a,22b,22c,22d) zu steuern, bei dem der Verkaufsautomat (1) ferner Mittel (50) zur Bestimmung eines individuellen Kaufpreises für Waren aus demselben Fach (3a,3b) zur Aufnahme von zu erwerbenden Waren aufweist und ein Verfahren zum Betrieb eines solchen Verkaufsautomaten (1).

## Beschreibung

Verkaufsautomaten stellen einen Vertriebsweg für Waren dar, der sich immer weiter steigender Beliebtheit erfreut. Für die Konsumenten haben sie den Vorteil, dass sie meistens 7 Tage in der Woche jeweils 24 Stunden am Tag zugänglich sind, so dass eine Rücksichtnahme auf Ladenöffnungszeiten nicht mehr erforderlich ist. Für die Anbieter der Waren haben sie den Vorteil, dass ein Ladenlokal weitgehend entfällt und dass ein Verkaufsmitarbeiter überflüssig wird, so dass Personalkosten entfallen, was zu einer relativ schnellen Amortisation der Investition in den Verkaufsautomaten führt. Dies bringt auch mit sich, dass immer mehr Hersteller von Produkten auch und gerade im Lebensmittelbereich beginnen, Verkaufsautomaten zum Direktvertrieb ihrer Waren zu benutzen und den klassischen Einzelhandel zu umgehen.

Aus dem Stand der Technik bekannte Verkaufsautomaten, wie man sie beispielsweise an Bahnhöfen regelmäßig vorfindet, weisen üblicherweise eine Anzahl von für den Kunden nicht zugänglichen Fächern für unterschiedliche Waren, eine Bezahlvorrichtung, und einen von einer Steuerelektronik in Abhängigkeit von der vom Kunden mittels einer Eingabevorrichtung getroffenen Auswahl und einem Freigabesignal der Bezahlvorrichtung, das gegeben wird, nachdem die Bezahlung mittels der Bezahlvorrichtung erfolgt ist, gesteuerten Ausgabemechanismus zum Überführen einer Ware aus einem dieser Fächer in ein Entnahmefach, auf das der Kunde Zugriff hat, auf. Zur Kommunikation bzw. Benutzerführung kann zudem ein Display vorhanden sein, das auch in die Bezahlvorrichtung integriert sein kann.

Zum Betrieb eines solchen Verkaufsautomaten werden die unterschiedlichen Waren jeweils einem oder (bei stark nachgefragten Waren, bei denen das Fassungsvermögen eines Faches nicht ausreicht) mehreren Fächern zugeordnet und die Fächer mit diesen Waren bestückt. Der Preis für die Ware, die in den jeweiligen Fächern angeordnet sind, wird in der Bezahlvorrichtung oder in einem Speicher, auf den die Bezahlvorrichtung zugreifen kann, hinterlegt. Wenn dies erfolgt ist, ist der Verkaufsautomat grundsätzlich einsatzbereit.

Der Kunde kann nun die gewünschte Ware an der Eingabevorrichtung eingeben, beispielsweise durch Eingabe einer Nummer, mit der das Fach, in dem die gewünschte Ware sich befindet, gekennzeichnet ist. Wenn der für diese Ware in der Bezahlvorrichtung hinterlegte Preis bezahlt wurde, erhält die Steuerelektronik eine Freigabe zur Betätigung des Ausgabemechanismus und steuert diesen an, so dass die gewünschte Ware in das Entnahmefach überführt und vom Kunden entnommen werden kann.

Ein Problem dieser bekannten Verkaufsautomaten und der Verfahren zu ihrem Betrieb besteht darin, dass der Preis der verkauften Waren, die in demselben Fach zum Verkauf angeboten werden, immer gleich ist, weil die Betätigung des Ausgabemechanismus von der erfolgreichen Verifikation, dass der dem gewählten Fach zugeordnete Verkaufspreis über die Bezahlvorrichtung gezahlt wurde, abhängt. In einigen vielversprechenden Einsatzbereichen für Verkaufsautomaten, insbesondere im Direktvertrieb von Lebensmitteln, beispielsweise durch Bauernhöfe oder durch Metzgereien, stellt dies aber ein Problem dar, weil die Produkte im Gegensatz zu vielen industriell hergestellten oder abgepackten Produkten nicht genormt sind, d.h. beispielsweise hinsichtlich ihres Gewichts variieren.

Konkret kann zum Beispiel die einem Fach zugeordnete Ware "Zucchini" oder "Steak" hinsichtlich Größe und Gewicht offensichtlich von Exemplar zu Exemplar signifikant variieren. Bei der Zuordnung eines festen Preises zu dem entsprechenden Fach führt dies zu gefühlten oder tatsächlichen Ungerechtigkeiten - hat der Kunde Pech, weil die nächste wählbare Zucchini oder das nächste wählbare Steak klein sind, zahlt er einen viel höheren Preis als der nächste Kunde, der das Glück hatte, dass das jeweilige danach folgende Exemplar größer war, was die Kundenzufriedenheit beeinträchtigt. Der Verkäufer kann ebenfalls nur mit einem gemittelten Preis für seine Waren arbeiten, was gegebenenfalls ebenfalls einer Ertragsoptimierung entgegensteht.

Die Aufgabe der Erfindung besteht daher darin, einen Verkaufsautomaten und ein Verfahren zum Betrieb eines Verkaufsautomaten bereitzustellen, mit dem eine individuelle Zuordnung von Preisen zu Waren, die in demselben Fach des Verkaufsautomaten angeordnet sind, möglich ist.

Diese Aufgabe wird gelöst durch einen Verkaufsautomaten mit den Merkmalen des Patentanspruchs 1 und ein Verfahren zum Betrieb eines Verkaufsautomaten mit den Merkmalen des Patentanspruchs 8. Vorteilhafte Weiterbildungen der Erfindung sind Gegenstand der jeweiligen abhängigen Ansprüche.

Der erfindungsgemäße Verkaufsautomat hat eine Mehrzahl von Fächern zur Aufnahme von zu erwerbenden Waren, ein Entnahmefach, auf das der Kunde zumindest zeitweise Zugriff hat, eine Eingabevorrichtung zur Auswahl einer zu erwerbenden Ware, eine Bezahlvorrichtung zum Entrichten eines Kaufpreises, einen Ausgabemechanismus zum Überführen einer Ware aus einem der Fächer zur Aufnahme von zu erwerbenden Waren in das Entnahmefach, auf das Kunden zumindest zeitweise Zugriff haben, und eine Steuerelektronik, welche ausgelegt und eingerichtet ist, um den Ausgabemechanismus in Abhängigkeit von der vom Kunden mittels einer Eingabevorrichtung getroffenen Auswahl und einem Freigabesignal der Bezahlvorrichtung zu steuern.

Erfindungswesentlich ist, dass der Verkaufsautomat ferner Mittel zur Bestimmung eines individuellen Kaufpreises für Waren aus demselben Fach zur Aufnahme von zu erwerbenden Waren aufweist.

Die konkrete Ausgestaltung dieser Mittel hängt von der Vorgehensweise bei der Zuordnung des individuellen Kaufpreises zu den Waren ab. Eine Möglichkeit besteht darin, dass man spätestens bei der Bestückung des Automaten jeder Ware, die man in ein Fach zur Aufnahme von zu erwerbenden Waren legt, einen Preis zuordnet. Dann muss man sicherstellen, dass entweder der Preis automatisiert direkt von der Ware ablesbar ist, beispielsweise indem man ein Preisschild oder einen Barcode aufklebt, das/der dann mit einer Kamera oder einem Scanner, die/der dann das Mittel zur Bestimmung des individuellen Kaufpreises bildet, erfasst und an die Steuerelektronik und/oder an die Bezahlvorrichtung weitergegeben wird. Bei dieser Vorgehensweise entfällt sogar die Notwendigkeit, gleichartige Waren in demselben Fach anzuordnen, weil der Preis ja an der jeweiligen Ware angeordnet ist.

Eine andere Möglichkeit besteht darin, jedes Fach zur Aufnahme von zu erwerbenden Waren mit einer Warenart zu bestücken und den Preis zu ermitteln, indem mit einer Waage als Mittel zur Bestimmung des individuellen Kaufpreises das Gewicht einer gerade zu erwerbenden Ware dieser Warenart bestimmt und an die Steuerelektronik und/oder an die Bezahlvorrichtung weitergegeben und mit einem dort oder in einem anderen Speicherbaustein des Verkaufsautomaten hinterlegten warenartabhängigen Grundpreis multipliziert wird, um den Preis der Ware zu ermitteln. Diese Vorgehensweise bietet sich besonders für den Verkauf von Lebensmitteln an, die in nicht normierten Mengen sondern pro Stück verkauft werden.

Die Waage ist vorteilhafterweise eine "selbsttätige" Waage. Dieser spezielle Typ von Waage wird verwendet, sobald die Waage in einen Prozess eingebunden wird, bei der diese nicht manuell nach dem Prozess auf null gestellt werden kann. Eine selbsttätige Waage tut dies nach Abschluss des Prozesses automatisch, wobei die Möglichkeit vorgesehen ist, im Backend des Automaten auch die Waage durch Intervention eines Administrators manuell auf null zu stellen. Wichtig ist bei der Verwendung einer Waage, dass sie exakt ausgerichtet (insbesondere "im Wasser") montiert ist, denn die Waage sollte eichfähig sein und zuverlässige Daten liefern. Die Waage gibt das ermittelte Gewicht an die Steuerelektronik, mit der sie in Signalkommunikation steht, weiter. Vorteilhaft ist es, wenn das Verpackungsgewicht vorab von dem Betreiber des Verkaufsautomaten eingepflegt und bei Verkauf des Produktes automatisch von dem Gesamtgewicht abgezogen wird.

Vorteilhaft ist es, wenn das von der Waage ermittelte Gewicht live auf einer Anzeigevorrichtung, z.B. einem Display oder einem als Eingabevorrichtung verwendeten Touch-Display, angezeigt wird und ggf. welche Rechnung für den Produktpreis vollführt wird und wie die Produktverpackung subtrahiert wird für völlige Transparenz und um das Vertrauen zu stärken.

Grundsätzlich kann es allerdings auch sinnvoll sein, wenn jedes Fach zur Aufnahme von zu erwerbenden Waren ein eigenes Mittel zur Bestimmung eines individuellen Kaufpreises aufweist. Dies kann es besonders einfach machen, den jeweiligen Kaufpreis zu ermitteln, beispielsweise indem das Gewicht einer verkauften Ware durch die Änderung des Gewichts des Faches, aus dem die Ware beim Verkauf entfernt wird, ermittelt wird oder indem beim Bestücken des Verkaufsautomaten die Preisschilder oder Barcodes in einer bestimmten Orientierung ausgerichtet werden, in der sie von einer/einem am Ausgang des Faches angeordneten Kamera/Scanner ausgelesen werden können.

Es hat sich aber besonders bewährt, wenn das Mittel zur Bestimmung eines individuellen Kaufpreises für Waren aus demselben Fach zur Aufnahme von zu erwerbenden Waren im Entnahmefach angeordnet ist. Da jede Ware, die verkauft wird, temporär im Entnahmefach landet, muss dann nur dort ein Mittel zur Bestimmung des individuellen Kaufpreises vorgesehen werden, und man vermeidet die Notwendigkeit, in jedem Fach zur Aufnahme von zu erwerbenden Waren ein Mittel zur Bestimmung des individuellen Kaufpreises vorzusehen, was zu erheblichen Kostenvorteilen führen kann.

Allerdings ist es dann hilfreich, dafür zu sorgen, dass sichergestellt ist, dass der individuelle Kaufpreis auch wirklich ausgelesen werden kann. Hilfreich kann dabei insbesondere sein, wenn das Mittel zur Bestimmung eines individuellen Kaufpreises für Waren aus demselben Fach zur Aufnahme von zu erwerbenden Waren eine Auflagefläche für die Ware aufweist und dass diese Auflagefläche einen Boden des Entnahmefachs bildet. Bei einer Waage könnte eine solche Auflagefläche die Waagschale bzw. die Fläche, auf die der zu wiegende Gegenstand gelegt wird, sein. Bei einem Scanner oder einer Kamera kann dies beispielsweise eine Glasfläche sein, unter der der Scanner oder die Kamera entlanggeführt wird.

Insbesondere dann, wenn man sich dafür entscheidet, Mittel zur Bestimmung eines individuellen Kaufpreises für Waren aus demselben Fach zur Aufnahme von zu erwerbenden Waren lediglich im Entnahmefach anzuordnen, ist es hilfreich, wenn der Ausgabemechanismus ausgelegt und eingerichtet ist, um die zu erwerbende Ware in einer definierten Orientierung in das Entnahmefach und/oder an eine definierte Stelle im Entnahmefach zu überführen. Aus dem Stand der Technik bekannte Ausgabemechanismen sind beispielsweise Spiralen, zwischen deren Windungen Waren angeordnet sind und die am Ausgang eines Fachs enden. Auf ein Freigabesignal der Steuerelektronik hin beginnen diese Spiralen zu rotieren und die zwischen den Windungen angeordneten Waren werden zum Ende der Spirale gefördert, von wo sie unkontrolliert in ein Entnahmefach stürzen. Wenn man sich für eine Kamera oder einen Scanner als Mittel zur Bestimmung eines individuellen Kaufpreises für Waren aus demselben Fach entschieden hat, kann es dazu kommen, dass die Waren dann in einer Orientierung landen, in der das Preisschild oder der Barcode nicht auslesbar sind, was durch die oben erwähnte Gestaltung des Ausgabemechanismus verhindert werden kann.

Grundsätzlich gibt es eine Vielzahl von Möglichkeiten, einen solchen Ausgabemechanismus zu realisieren. Beispielsweise kann mit einem Roboterarm eine äußerst exakte Positionierung im Ausgabefach erreicht werden, was allerdings eine kostspielige Lösung darstellt.

Ein für eine hinreichend genaue Positionierung geeigneter, relativ kostengünstig realisierbarer Ausgabemechanismus weist einen ersten Aktor zum Befördern der zu erwerbenden Ware aus einem Ausgang des Fachs heraus und einen zweiten Aktor zum Bewegen zumindest eines Bodens des Entnahmefachs oder des ganzen Entnahmefachs zu einer Position vor dem Ausgang des Fachs auf. Dabei sind die Bewegungen des ersten Aktors und des zweiten Aktors so aufeinander abgestimmt, dass die vom ersten Aktor aus dem Ausgang des Fachs hinausbewegte zu erwerbende Ware auf den Boden des Entnahmefachs überführt wird. Da die Bewegung durch den ersten Aktor bevorzugt im Wesentlichen in einer Ebene liegt, kann eine Veränderung der Orientierung der zu erwerbenden Ware leicht vermieden werden, so dass die Position eines Preisschilds oder Barcodes, die beim Bestücken des Fachs vorgegeben wird, erhalten bleibt. Wegen der Positionierung des Bodens des Entnahmefachs bzw. des Entnahmefachs wird zudem ein unkontrolliertes Fallen der zu erwerbenden Ware vermieden. Dies ist bei der Verwendung von Waagen von besonderer Bedeutung, weil dadurch vermieden wird, dass die Waage sich erst längere Zeit einschwingen muss, bis ein zuverlässiger Messwert erhalten wird.

Ein besonderes Problem, das sich aus der Bestimmung eines individuellen Verkaufspreises für Waren aus demselben Fach zur Aufnahme von zu erwerbenden Waren ergeben kann ist, dass der Verkaufspreis der nächsten zu erwerbenden Ware bei der Aktivierung des Ausgabemechanismus in einigen (aber nicht allen, denn es ist denkbar, dass die Mittel zur Bestimmung eines individuellen Kaufpreises für Waren im jeweiligen Fach so angeordnet sind, dass sie den Verkaufspreis für die jeweils nächste zu verkaufende Ware aus diesem Fach ermitteln) Konfigurationen noch nicht feststeht. Deshalb ist es vorteilhaft, wenn mittels der Bezahlvorrichtung zum Entrichten eines Kaufpreises zunächst ein Guthaben hinterlegt wird, das so dimensioniert ist, dass es den maximalen Kaufpreis der wählbaren Waren übersteigt, und dann ein Freigabesignal gegeben wird, das mittelbar oder unmittelbar zur Überführung dieser Ware in eine Position, in der ihr individueller Preis ermittelbar ist und der Ermittlung ihres Preise führt, der dann vom Guthaben abgezogen wird, ehe das Restguthaben ausgezahlt oder bei einer bargeldlosen Zahlung zurückgebucht wird.

Der Zugang des Kunden zum Ausgabefach kann beispielsweise durch eine verriegelbare Klappe und/oder durch die Position des Bodens des Ausgabefachs kontrolliert werden.

Das erfindungsgemäße Verfahren zum Betrieb eines solchen Verkaufsautomaten umfasst die Schritte
- Auswählen der zu erwerbenden Ware mittels der Eingabevorrichtung,
- Bezahlen der ausgewählten Ware mittels der Bezahlvorrichtung,
- Überführen der zu ausgewählten Ware in das Entnahmefach bzw. auf dessen Boden, und
- Freigeben des Zugriffs des Kunden auf das Entnahmefach.

Erfindungswesentlich ist, dass mittels des Mittels zur Bestimmung eines zu bezahlenden individuellen Kaufpreises für Waren aus demselben Fach zur Aufnahme von zu erwerbenden Waren ein individueller Kaufpreis für zu erwerbende Waren aus demselben Fach ermittelt wird. Dies ermöglicht insbesondere bei Produkten, bei denen die Menge variiert, wie es z.B. bei variablen Packungsgrößen oder variabler Größe von stückweise verkauften Waren der Fall ist, eine faire Bepreisung beim Automatenverkauf.

In einer vorteilhaften Ausführungsform des Verfahrens wird zum Bezahlen der ausgewählten Ware zunächst ein Guthaben mittels der Bezahlvorrichtung hinterlegt, dann der ermittelte individuelle Kaufpreis für die zu erwerbende Ware von dem Guthaben abgezogen und schließlich das Restguthaben zurückgezahlt wird.

Da auf diese Weise der Kauf bereits abgesichert ist, wird es ermöglicht, die Bestimmung des individuellen Kaufpreises außerhalb des Fachs zur Aufnahme der zu erwerbenden Waren vorzunehmen. Diese kann aber grundsätzlich auch innerhalb dieses Fachs erfolgen, beispielsweise durch die optische Erfassung eines Labels, das die relevanten Informationen trägt, mit einer Kamera oder einem Scanner, die/der so angeordnet ist, dass sie/er jeweils die vorderste Ware in einem Fach, die als nächstes aus diesem Fach verkauft wird, erfasst.

Bevorzugt wird jedoch der individuelle Kaufpreis der ausgewählten zu erwerbenden Ware ermittelt, nachdem sie mittels des Ausgabenmechanismus ins Entnahmefach überführt wurde. Dies reduziert den zu treibenden Hardwareaufwand.

Besonders vorteilhaft ist es, wenn der Ausgabemechanismus zum Überführen der ausgewählten zu erwerbenden Ware in das Entnahmefach zumindest einen Boden des Entnahmefachs bzw. das gesamte Entnahmefach so bewegt, dass er/es vor dem Fach, in dem sich die ausgewählte zu erwerbende Ware befindet, angeordnet ist. Dies führt zu einer signifikanten Reduktion von Störfaktoren bei der Ermittlung des individuellen Preises, weil insbesondere dann, wenn die ausgewählte zu erwerbende Ware in das Entnahmefach hineinfällt, einerseits unkontrollierbare Änderungen ihrer Orientierung im Raum vorkommen können, die dazu führen können, dass die auszulesende Information nicht mehr im Erfassungsbereich von optischen Mitteln zur Ermittlung des individuellen zu bezahlenden Preises landet und andererseits eine Störung auf eine mit einer Waage im Entnahmefach durchgeführte Gewichtserfassung aufgeprägt werden kann, die abklingen muss, ehe eine zuverlässige Gewichtsermittlung möglich wird.

Weitergebildet wird diese Ausführungsform zweckmäßigerweise dadurch, dass der Ausgabemechanismus zum Überführen der ausgewählten zu erwerbenden Ware in das Entnahmefach nach der Bewegung des Bodens des Entnahmefachs die ausgewählte zu erwerbende Ware aus dem Fach, in dem sie sich befindet, hinausbefördert, um sie so auf den Boden des Entnahmefachs zu überführen. Besonders bevorzugt ist es dabei, wenn dies auf eine Art und Weise erfolgt, bei der die Orientierung der Ware im Raum im Wesentlichen erhalten bleibt. Dies kann beispielsweise mittels Spiralen, Rutschen, Laufbändern oder Schiebern erfolgen.

Man kann in einer bevorzugten Variante des Verfahrens den Verkaufsautomaten auch so betreiben, dass der Kunde über die Eingabevorrichtung mehrere Waren auswählen kann. Die Abarbeitung dieses Kundenauftrags beginnt dann, wenn der Kunde den Abschluss der Auswahl quittiert. Bei dieser Variante ist es besonders vorteilhaft, wenn der Ausgabemechanismus das Entnahmefach nacheinander vor die entsprechenden Fächer fährt und zunächst alle ausgewählten Waren einsammelt, ehe er zurück zur Entnahmeklappe führt, wo der Kunde dann alle Waren entnehmen kann. Dies kann in der Reihenfolge der Eingabe erfolgen; die Bearbeitungsgeschwindigkeit wird aber signifikant erhöht, wenn das Entnahmefach die Fächer entweder von unten nach oben oder von unten nach oben anfährt.

Insbesondere dann, wenn eine Waage als Mittel zur Bestimmung des individuellen Preises des jeweils ausgewählten zu erwerbenden Produkts verwendet wird, legt die Steuereinheit also die Änderung des von der Waage gemeldeten Gewichts der Berechnung des Preises für das gerade von dem Entnahmefach "abgeholten" ausgewählte Produkt zu Grunde.

Um sicherzustellen, dass der Kunde auch Zugriff auf seine erworbenen Waren hat und der Zugang zum Entnahmefach nicht zu früh gesperrt ist, ist es bei Verwendung einer Waage möglich, als Bedingung für das Verriegeln eines Zugangs zum Entnahmefach zu setzen, dass die Waage wieder im unbelasteten Zustand ist, so dass die Waage auch als Sensor für die Entnahme des erworbenen Produkts verwendet wird.

In einer ersten Variante des Verfahrens wird die zur Ermittlung des individuellen Kaufpreises der zu erwerbenden Ware notwendige Information beim Bestücken des Fachs zur Aufnahme von zu erwerbenden Waren zugeordnet. Dies kann beispielweise dadurch erfolgen, dass diese Information codiert, beispielsweise als Barcode, oder uncodiert, wenn ein direktes Auslesen mit einer Kamera erfolgt, auf die zu erwerbende Ware aufgebracht wird.

Alternativ dazu kann der individuelle Kaufpreis der zu erwerbenden Ware ermittelt werden, indem ein Grundpreis der Warengattung mit einer durch das Mittel zur Bestimmung eines individuellen Kaufpreises für Waren aus demselben Fach zur Aufnahme von zu erwerbenden Waren ermittelten, mit der Warenmenge korrelierten Größe multipliziert wird. Dies kann beispielsweise ein mit einer Waage ermitteltes Gewicht oder ein beispielsweise durch Messung eines Füllstands ermitteltes Volumen sein.

Die Erfindung wird nachfolgend anhand von Figuren, die Ausführungsbeispiele darstellen, näher erläutert. Es zeigt:
- Fig.1:: Eine Ansicht eines Verkaufsautomaten von vorne im betriebsbereiten Zustand mit geschlossener Tür;
- Fig.2:: eine Ansicht des Verkaufsautomaten aus Figur 1 von vorne im zur Bestückung und Wartung geeigneten Zustand mit geöffneter Tür; und
- Fig.3:: eine Ansicht eines Ausführungsbeispiels eines Entnahmefachs für den Verkaufsautomaten aus Figur 1 und 2.

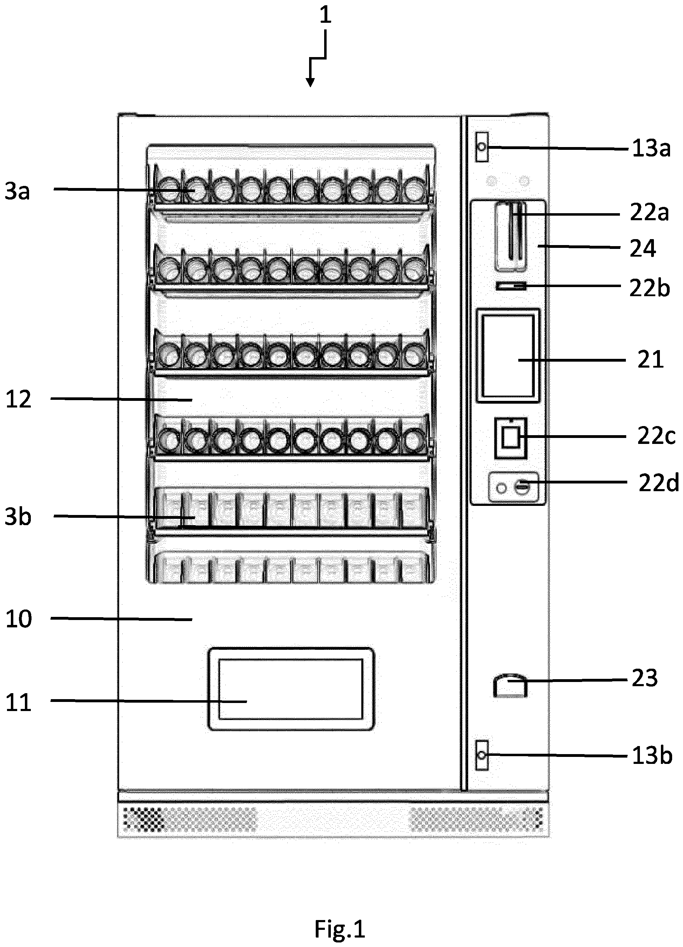

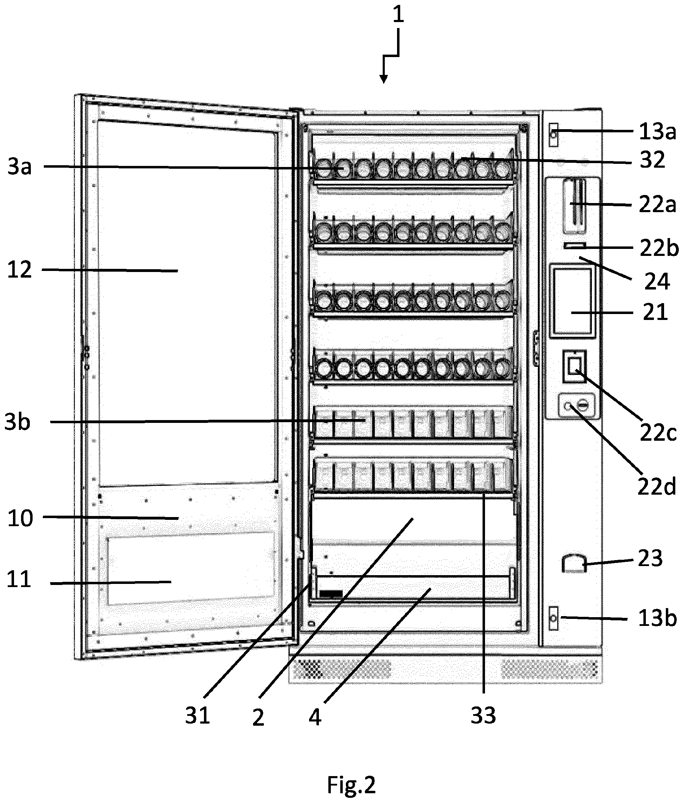

Die Figuren 1 und 2 zeigen eine Ansicht eines Verkaufsautomaten 1 von vorne. Der Verkaufsautomat 1 hat in diesem Ausführungsbeispiel eine Mehrzahl von in sechs übereinander liegenden Reihen in einem durch eine Tür 10 verschließbaren Innenraum 2 des Verkaufsautomaten angeordneten Fächern 3a,3b zur Aufnahme von zu erwerbenden, in den Figuren nicht dargestellten Waren.

Der Innenraum 2 des Verkaufsautomaten 1 kann vorzugsweise mit nicht dargestellten Leuchtmitteln beleuchtet sein. Je nach Art der Waren, für deren Verkauf er dient, kann auch eine Klimatisierung des Innenraums vorgesehen sein, insbesondere eine Kühlung für Fleischwaren oder Milchprodukte.

Darüber hinaus hat der in den Figuren 1 und 2 dargestellte Verkaufsautomat 1 ein Entnahmefach 4, auf das der Kunde zumindest zeitweise durch eine in der Tür 10 des Verkaufsautomaten angeordnete, von einer Steuerelektronik 24 gesteuert ver- und entriegelbare Klappe 11 Zugriff hat. Die Tür 10 weist darüber hinaus ein Fenster 12 auf, das bei geschlossener Tür 10 Kunden erlaubt, den Inhalt der Fächer 3a,3b zu sehen, und kann mit Schlössern 13a,13b verschlossen werden.

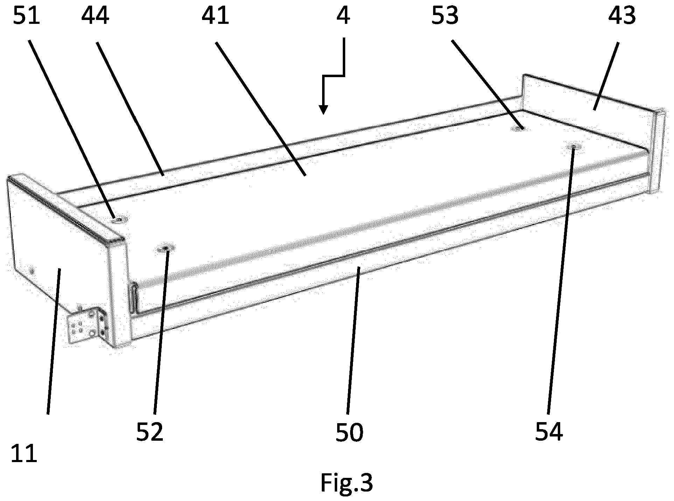

Das Entnahmefach 4 ist in Figur 3 einzeln dargestellt. Es weist einen Boden 41 auf und zwei Seitenwände 42,43 sowie eine halbhohe Rückwand 44 auf. Der Boden 41 wird in diesem Ausführungsbeispiel durch das Mittel 50 zur Bestimmung eines individuellen Kaufpreises für Waren aus demselben Fach bzw. einen seiner Bestandteile gebildet, nämlich durch die Wiegefläche einer Waage, die auf vier Wägezellen 51,52,53,54 ruht. In einer anderen, nicht dargestellten Ausführungsform kann der Boden 41 aber auch beispielsweise eine einfache Bodenplatte sein und das Mittel 50 zur Bestimmung eines individuellen Kaufpreises für Waren aus demselben Fach ein zwischen den Seitenwänden 42,43 verfahrbarer Scanner gelagert sein. Eine weitere Alternative kann darin bestehen, den Boden 41 als transparente Platte, insbesondere als Glasplatte auszugestalten, die eine Auflagefläche für einen darunter, vorzugsweise beweglich angeordneten Scanner oder eine ebenso angeordnete Kamera bildet.

Das dargestellte Ausführungsbeispiel des Verkaufsautomaten 1 hat eine Eingabevorrichtung 21 zur Auswahl einer zu erwerbenden Ware, die in diesem Beispiel als ein Touch-Display ausgeführt ist. Das Touch-Display kann zur Auswahl der zu erwerbenden Ware beispielsweise ein Zahlenfeld anzeigen, in das man eine am zugehörigen Fach 3a,3b dargestellten Code-Bezeichnung oder Nummer des Fachs eingeben kann, oder eine schematische Wiedergabe der Fachanordnung anzeigen, auf der der Kunde einfach das Fach antippt, dessen Inhalt er erwerben möchte. Vor und/oder nach dem Auswahlprozess kann ein solches Touch-Display auch Anweisungen zur Bedienung des Verkaufsautomaten 1 wiedergeben.

Darüber hinaus hat das dargestellte Ausführungsbeispiel des Verkaufsautomaten 1 eine Mehrzahl von Bezahlvorrichtungen 22a,22b,22c,22d zum Entrichten eines Kaufpreises, die als Kartenlesegerät, Einzug für Geldscheine, NFC-Schnittstelle zum kontaktlosen Bezahlen bzw. Münzeinwurf ausgeführt sind und ein Geldrückgabefach 23. Der Verkaufsautomat kann auch einen nicht dargestellten integrierten Drucker haben, der es erlaubt, Quittungen und Kaufbelege auszudrucken und über das Geldrückgabefach 23 oder über ein separates Ausgabemittel dem Käufer zur Verfügung zu stellen.

Die Eingabevorrichtung 21 und die Bezahlvorrichtungen 22a,22b, 22c, 22d sind diesem Ausführungsbeispiel in eine Steuerelektronik 24 integriert, die den Verkaufsautomaten 1 steuert und das Zusammenwirken seiner Komponenten regelt.

Im gezeigten Ausführungsbeispiel wird der Ausgabemechanismus zum Überführen einer Ware aus einem der Fächer 3a,3b zur Aufnahme von zu erwerbenden Waren in das Entnahmefach 4, auf das der Kunde zumindest zeitweise Zugriff hat, durch mehrere Komponenten gebildet. Erstens umfasst er ein Hubsystem 31 für das Entnahmefach 4, mit dem dieses durch die Steuerelektronik 24 gesteuert vor das Fach 3a,3b gefahren wird, in dem sich die vom Kunden ausgewählte zu erwerbende Ware befindet. Zweitens umfasst er in den Fächern 3a angeordnete, jeweils durch einen Antrieb durch die Steuerelektronik 24 in Rotation versetzbare Spiralen 32, die eine in sie eingesetzte Ware in Richtung auf den Betrachter zu zum Ausgang des Faches 3a bewegen und dort freigeben, so dass die Ware in das mit dem Hubsystem 31 auf dieses Niveau gebrachte Entnahmefach 4 überführt wird. Drittens umfasst der Ausgabemechanismus in den Fächern 3b angeordnete Laufbänder 33, die von der Steuerelektronik aktiviert werden, um eine auf sie aufgelegte Ware in Richtung auf den Betrachter zu zum Ausgang des Faches 3b zu bewegen und dort freizugeben, so dass die Ware in das mit dem Hubsystem 31 auf dieses Niveau gebrachte Entnahmefach 4 überführt wird.

Abschließend soll noch ein Beispiel für die Verwendung des Verkaufsautomaten 1 aus Kundensicht und aus Betreibersicht beschrieben werden.

Für den Kunden läuft ein beispielhafter Kaufprozess an einem Automaten, an dem unterschiedliche Lebensmittel zu gewichtsbezogenen Preisen abgegeben werden, folgendermaßen ab:
1. Der Kunde betrachtet durch das Fenster 12 das Produktportfolio des Verkaufsautomaten 1.
2. Anschließend kann der Kunde ein Produkt über das verbaute Touch-Display auswählen.
3. Der Kunde drückt dazu für die Bestellung auf das jeweilige Produktbild und sieht dort einen Kilopreis für dieses Lebensmittel.
4. Bevor jedoch ein Produkt von dem Verkaufsautomaten 1 ausgegeben wird, muss ein Guthaben hinterlegt werden. Optional kann dieser Schritt auch bereits vor der Auswahl eines Produkts erfolgen.
5. Nun zahlt der Kunde mit einem der Mittel zum Entrichten eines Kaufpreises das Guthaben, beispielsweise 20€, ein über Bargeld oder Karte.
6. Wenn der Kredit eingezahlt wurde, startet der Verkaufsautomat den Verkaufsprozess, indem das Entnahmefach 4 als Teil des Ausgabemechanismus nach oben vor das Fach 3a,3b gefahren wird, in dem sich das ausgewählte Produkt befindet.
7. Das jeweilige Fach 3a,3b transportiert das Produkt durch eine weitere Komponente des Ausgabemechanismus, wie z.B. der Spirale 32 oder das Laufband 33, aus dem Fach 3a,3b in das Entnahmefach 4, dessen Boden 41 beispielsweise durch die Wiegefläche einer Waage gebildet wird.
8. Die Waage ermittelt das genaue Gewicht des Produktes und übermittelt dieses an die Steuerelektronik 24.
9. Die Steuerelektronik 24 subtrahiert das betreiberseitig hinterlegte Gewicht der Verpackung und ermittelt so das genaue Gewicht, welches an dem Display gezeigt wird, und errechnet aus dem genauen Gewicht und dem betreiberseitig hinterlegten Preis für dieses Produkt den centgenauen Betrag, der ebenfalls an dem Display angezeigt wird.
10. Der ermittelte Preis, beispielsweise 4,99€, wird dem Kunden von dem eingezahlten Guthaben von 20,00€ abgezogen; der Rest, in diesem Beispiel also 15,01€, wird zurückerstattet. Wurde das Guthaben mittels Kartenzahlung gezahlt, wird die Rückerstattung über das Konto erfolgen; bei Barzahlung wird die Rückerstattung direkt am Automaten über Bargeld erfolgen.
11. Der Kunde kann sein abgewogenes Produkt entnehmen, genauso wie sein Rückgeld.

Aus Sicht des Automatenbetreibers läuft ein beispielhafter Betrieb des Verkaufsautomaten folgendermaßen ab:
1. Der Betreiber legt über ein proprietäres Backend System fest, welches Produkt in welches Fach 3a,3b geräumt wird, anschließend wird das Fach 3a,3b per Hand gefüllt.
2. Der Betreiber hinterlegt für das jeweilige Fach 3a,3b und Produkt: Kilogrammpreis, Verpackungsgewicht und gegebenenfalls eine Umrechnungsformel. Diese Angaben können für jede Art von Produkt und jedes Fach 3a,3b unterschiedlich sein.
3. Im Backend des Verkaufsautomaten 1, ist der Ablauf wie folgt:
   - Der Verkaufsautomat 1 fordert die Einzahlung des Guthabens vorab entweder als Reaktion auf eine Betätigung der Eingabevorrichtung oder unabhängig von einer solchen Betätigung gewissermaßen als Grundvoraussetzung für den weiteren Betrieb.
   - Wenn die Bezahlvorrichtung der Steuerelektronik 24 meldet, dass das Guthaben eingezahlt ist, führt die Auswahl eines Produkts über die Bedienvorrichtung zur Aktivierung der Ausgabevorrichtung, die das Entnahmefach 4 vor das Fach 3a,3b, in dem sich das ausgewählte Produkt befindet fährt und das Produkt in das Entnahmefach 4 überführt.
   - Die Waage im Boden des Entnahmefachs 4 bestimmt das Gewicht des Produkts und teilt der Steuerelektronik 24 im Automaten das Gesamtgewicht des Produktes mit, das unter Berücksichtigung des Verpackungsgewichtes von der Steuerelektronik 24 weiterverwendet wird.
   - Anhand des Gewichtes wird über den Kilopreis der centgenaue Verkaufspreis ermittelt.
   - Dieser Verkaufspreis, welcher durch den Verkaufsautomaten 1 errechnet wurde, wird nun von dem eingezahlten Guthaben subtrahiert und die Differenz wird als Rückgeld wieder ausgezahlt. Bei der Kartenzahlung wird der Vorabkredit lediglich auf dem Konto eingefroren und nicht abgezogen, lediglich der tatsächliche Verkaufspreis wird von dem Konto abgezogen. Bei Bargeld erfolgt das Rückgeld beispielsweise über die Münzausgabe 23.
   - Sobald das Produkt von dem Kunden entnommen wurde, wird die Waage automatisch auf Null gesetzt und ist für den nächsten Verkauf bereit. Die Ausgabeklappe bleibt so lange geöffnet, bis der Kunde sein Produkt entnommen hat, dies wird über die Waage gesteuert.
   - Sobald das Produkt entnommen wurde, schließt die Ausgabeklappe ab, sodass ohne Kauf, kein Kunde die Tür öffnen kann. Der Automat ist nun für den nächsten Kunden bereit.

### Bezugszeichenliste

- 1: Verkaufsautomat
- 2: Innenraum
- 3a,3b: Fach
- 4: Entnahmefach
- 10: Tür
- 11: Klappe
- 12: Fenster
- 13a,13b: Schloss
- 21: Eingabevorrichtung
- 22a,22b,22c,22d: Mittel zum Entrichten eines Kaufpreises
- 23: Geldrückgabefach
- 24: Steuerelektronik
- 31: Hubsystem
- 32: Spirale
- 33: Laufband
- 41: Boden
- 42,43: Seitenwände
- 44: Rückwand
- 50: Mittel zur Bestimmung eines individuellen Kaufpreises
- 51,52,53,54: Wägezellen

## Patentansprüche

1. Verkaufsautomat (1) mit
- einer Mehrzahl von Fächern (3a,3b) zur Aufnahme von zu erwerbenden Waren,
- einem Entnahmefach (4), auf das der Kunde zumindest zeitweise Zugriff hat,
- einer Eingabevorrichtung (21) zur Auswahl einer zu erwerbenden Ware,
- einer Bezahlvorrichtung (22a,22b,22c,22d) zum Entrichten eines Kaufpreises,
- einem Ausgabemechanismus (31,32,33) zum Überführen einer Ware aus einem der Fächer (3a,3b) zur Aufnahme von zu erwerbenden Waren in das Entnahmefach (4), auf das Kunden zumindest zeitweise Zugriff haben, und
- einer Steuerelektronik (23), welche ausgelegt und eingerichtet ist, um den Ausgabemechanismus (31,32,33) in Abhängigkeit von der vom Kunden mittels einer Eingabevorrichtung (21) getroffenen Auswahl und einem Freigabesignal der Bezahlvorrichtung (22a,22b,22c,22d) zu steuern, **dadurch gekennzeichnet, dass** der Verkaufsautomat (1) ferner Mittel (50) zur Bestimmung eines individuellen Kaufpreises für Waren aus demselben Fach (3a,3b) zur Aufnahme von zu erwerbenden Waren aufweist.

2. Verkaufsautomat (1) nach Anspruch 1,
**dadurch gekennzeichnet, dass** das Mittel (50) zur Bestimmung eines individuellen Kaufpreises für Waren aus demselben Fach (3a,3b) zur Aufnahme von zu erwerbenden Waren ein Scanner oder eine Kamera ist.

3. Verkaufsautomat (1) nach Anspruch 1,
**dadurch gekennzeichnet, dass** das Mittel (50) zur Bestimmung eines individuellen Kaufpreises für Waren aus demselben Fach (3a,3b) zur Aufnahme von zu erwerbenden Waren eine Waage ist.

4. Verkaufsautomat (19 nach einem der Ansprüche 1 bis 3, **dadurch gekennzeichnet, dass** das Mittel (50) zur Bestimmung eines individuellen Kaufpreises für Waren aus demselben Fach (3a,3b) zur Aufnahme von zu erwerbenden Waren im Entnahmefach (4) angeordnet ist.

5. Verkaufsautomat (1) nach Anspruch 4,
**dadurch gekennzeichnet, dass** das Mittel (50) zur Bestimmung eines individuellen Kaufpreises für Waren aus demselben Fach (3a,3b) zur Aufnahme von zu erwerbenden Waren eine Auflagefläche für die Ware aufweist und dass diese Auflagefläche einen Boden (41) des Entnahmefachs (4) bildet.

6. Verkaufsautomat (1) nach einem der Ansprüche 1 bis 5, **dadurch gekennzeichnet, dass** der Ausgabemechanismus (31,32,33) ausgelegt und eingerichtet ist, um die zu erwerbende Ware in einer definierten Orientierung in das Entnahmefach (4) und/oder an eine definierte Stelle im Entnahmefach (4) zu überführen.

7. Verkaufsautomat (1) nach einem der Ansprüche 1 bis 6, **dadurch gekennzeichnet, dass** der Ausgabemechanismus (31,32,33) einen ersten Aktor (32,33) zum Befördern der zu erwerbenden Ware aus einem Ausgang des Fachs (3a,3b) heraus und einen zweiten Aktor (31) zum Bewegen zumindest eines Bodens (41) des Entnahmefachs (4) zu einer Position vor dem Ausgang des Fachs (3a,3b) zur Aufnahme von zu erwerbenden Waren aufweist und dass die Bewegungen des ersten Aktors (32,33) und des zweiten Aktors (31) so aufeinander abgestimmt sind, dass die vom ersten Aktor (32,33) aus dem Ausgang des jeweiligen Fachs (3a,3b) zu Aufnahme von zu erwerbenden Waren hinausbewegte zu erwerbende Ware auf den Boden (41) des Entnahmefachs (4) überführt wird.

8. Verfahren zum Betrieb eines Verkaufsautomaten (1) nach einem der Ansprüche 1 bis 7 mit den Schritten
- Auswählen der zu erwerbenden Ware mittels der Eingabevorrichtung (21),
- Bezahlen der ausgewählten Ware mittels der Bezahlvorrichtung (22a,22b,22c,22d),
- Überführen der zu ausgewählten Ware in das Entnahmefach (4) mittels des Ausgabemechanismus (31,32,33), und
- Freigeben des Zugriffs des Kunden auf das Entnahmefach (4)
**dadurch gekennzeichnet, dass** mittels des Mittels (50) zur Bestimmung eines zu bezahlenden individuellen Kaufpreises für Waren aus demselben Fach (3a,3b) zur Aufnahme von zu erwerbenden Waren ein individueller Kaufpreis für zu erwerbende Waren aus demselben Fach (3a, 3b) ermittelt wird.

9. Verfahren nach Anspruch 8,
**dadurch gekennzeichnet, dass** zum Bezahlen der ausgewählten Ware zunächst ein Guthaben mittels der Bezahlvorrichtung (22a,22b,22c,22d) hinterlegt wird, dass der ermittelte individuelle Kaufpreis für die zu erwerbende Ware von dem Guthaben abgezogen wird und dass das Restguthaben zurückgezahlt wird.

10. Verfahren nach Anspruch 8 oder 9,
**dadurch gekennzeichnet, dass** der individuelle Kaufpreis der ausgewählten zu erwerbenden Ware ermittelt wird, nachdem sie mittels des Ausgabenmechanismus (31,32,33) ins Entnahmefach (4) überführt wurde.

11. Verfahren nach einem der Ansprüche 8 bis 10,
**dadurch gekennzeichnet, dass** der Ausgabemechanismus (31,32,33) zum Überführen der ausgewählten zu erwerbenden Ware in das Entnahmefach (4) zumindest einen Boden (41) des Entnahmefachs (4) so bewegt, dass er vor dem Fach (3a,3b), in dem sich die ausgewählte zu erwerbende Ware befindet, angeordnet ist.

12. Verfahren nach Anspruch 11,
**dadurch gekennzeichnet, dass** der Ausgabemechanismus (31,32,33) zum Überführen der ausgewählten zu erwerbenden Ware in das Entnahmefach (4) nach der Bewegung des Bodens (41) des Entnahmefachs (4) die ausgewählte zu erwerbende Ware aus dem Fach (3a,3b), in dem sie sich befindet, hinausbefördert.

13. Verfahren nach Anspruch 12,
**dadurch gekennzeichnet, dass** der Ausgabemechanismus (31,32,33) zum Überführen der ausgewählten zu erwerbenden Ware in das Entnahmefach (4) nach der Bewegung des Bodens (41) des Entnahmefachs (4) die ausgewählte zu erwerbende Ware aus dem Fach (31,32,33), in dem sie sich befindet, so hinausbefördert, dass ihre Orientierung im Raum im Wesentlichen erhalten bleibt.

14. Verfahren nach einem der Ansprüche 8 bis 13,
**dadurch gekennzeichnet, dass** die zur Ermittlung des individuellen Kaufpreises der zu erwerbenden Ware notwendige Information beim Bestücken des Fachs (3a,3b) zur Aufnahme von zu erwerbenden Waren zugeordnet wird.

15. Verfahren nach einem der Ansprüche 8 bis 13 **dadurch gekennzeichnet, dass** der individuelle Kaufpreis der zu erwerbenden Ware ermittelt wird, indem ein Grundpreis der Warengattung mit einer durch das Mittel (50) zur Bestimmung eines individuellen Kaufpreises für Waren aus demselben Fach (3a,3b) zur Aufnahme von zu erwerbenden Waren ermittelten, mit der Warenmenge korrelierten Größe multipliziert wird.
